Europäisches Patentamt

European Patent Office

Office européen des brevets

(11) Publication number: **0 054 264**
**A2**

(12) **EUROPEAN PATENT APPLICATION**

(21) Application number: **81110316.7**

(22) Date of filing: **10.12.81**

(51) Int. Cl.³: **F 16 T 1/30**
**F 16 T 1/38, F 16 L 39/04**

(30) Priority: **17.12.80 US 217491**

(43) Date of publication of application:
**23.06.82 Bulletin 82/25**

(84) Designated Contracting States:
**BE DE FR GB IT**

(71) Applicant: **ARMSTRONG INTERNATIONAL, INC.**
**900 Maple Street**
**Three Rivers Michigan(US)**

(72) Inventor: **Schlesch, Ronald Duane**
**915 Elm Street**
**Three Rivers Michigan(US)**

(72) Inventor: **Lyons, Robert Fred**
**R.R.1, Box 392**
**Centerville Michigan(US)**

(74) Representative: **Patentanwälte Grünecker,**
**Dr.Kinkeldey Dr.Stockmair, Dr.Schumann,Jakob,**
**Dr.Bezold Meister, Hilgers, Dr.Meyer-Plath**
**Maximilianstrasse 43**
**D-8000 München 22(DE)**

(54) Combined inlet and outlet fitting.

(57) A combined inlet and outlet fitting for a fluid handling mechanism comprising a block having an inlet passage and an outlet passage having corresponding one ends adapted to be connected to the mechanism and the opposite ends thereof extending to the same one longitudinal end of the block. A coupling is attached to said one end of the block so that it can be moved arcuately relative to the block. The coupling has inlet and outlet ports connected to said inlet and outlet passages, respectively. Fastening means are provided for releasably securing said coupling in fluid-tight sealed relationship with said block.

FIG. I

-1-

## COMBINED INLET AND OUTLET FITTING

This invention relates to a combined inlet and outlet fitting for fluids, particularly for use in combination with an inverted bucket-type steam trap having a side inlet and a side outlet adjacent to the upper end thereof.

It is well known to use steam traps in order to trap or retain steam in a device or system, while permitting condensate to be removed. One specific type of steam trap is the so-called inverted bucket-type steam trap which has been extensively used for controlling the flow of condensate from a steam-heated unit to a condensate return line. Such traps are generally utilized to permit disposal of the condensate while at the same time minimizing loss of live steam from the steam-heated unit. An inverted bucket steam trap must be installed in a vertical upright position in order to operate in the intended fashion. However, depending on the requirements of a particular installation, the inlet conduit for supplying steam and condensate to the trap and the outlet conduit for removing the condensate from the trap can be disposed at various angles relative to the steam trap and, therefore, it is sometimes necessary to provide special conduit arrangements in order properly to connect the trap to the remainder of the installation. Moreover, it is conventional to provide separate inlets and outlets to steam traps, which means that the installation and removal of the traps require considerable work.

U. S. Patent No. 4 149 557 discloses an example of an inverted bucket-type steam trap in which the inlet and the outlet are disposed at the upper end of the casing and extend sidewardly therefrom in opposite lateral directions. Although inverted bucket-type steam traps having side inlets and side outlets extending in opposite lateral directions are satisfactory for most purposes, there are certain types of installations for which it is desired to connect the inlet conduit and the outlet conduit to the trap on the same lateral side of the trap.

Further, in U. S. Patent No. 4 149 557, the inverted bucket-type steam trap comprises a sealed casing made of two cup-shaped sheet metal parts which are welded together to form a cylindrical casing having dome-shaped ends and the inverted bucket mechanism is disposed within that casing. That type of inverted bucket-type steam trap is relatively inexpensive in comparison with inverted bucket-type steam traps in which the casings are made of castings or forgings. It is an economic advantage of the inverted bucket-type steam trap of the type shown in Patent No. 4 149 557 that it can be thrown away when it ceases to function properly. However, because that steam trap has its inlet and outlet extending in opposite lateral directions, it is necessary to disconnect that trap at two locations, which is expensive and time consuming and detracts from the overall economy of using that type of trap.

Insofar as is known, it has not previously been suggested to provide a single fitting which provides both an inlet and an outlet for an inverted bucket steam trap, despite the fact that such steam traps have been known and used for over seventy years.

Accordingly, it is an object of this invention to provide a combined inlet and outlet fitting for a fluid handling mechanism, particularly a fitting for use in combination with a steam trap having a side inlet and a side outlet.

Another object of this invention is to provide a combined inlet and outlet fitting, as aforesaid, in which the mechanism to which the fitting is connected can be removed in a single operation and a new mechanism installed in its place easily, rapidly and inexpensively.

Another object of this invention is to provide a combined inlet and outlet fitting, as aforesaid, in which the inlet and outlet ports of the fitting can be moved arcuately, relative to the mechanism to which they are connected, so that the inlet conduit and the outlet conduit, to which the inlet port and outlet port are respectively connected, can be disposed at any angle relative to said mechanism.

Another object of this invention is to provide an improved inverted bucket-type steam trap which is provided with a combined inlet and outlet fitting, as aforesaid.

BRIEF DESCRIPTION OF THE DRAWINGS

Other objects and purposes of this invention will become apparent to persons acquainted with equipment of this general type on reading the following description and inspecting the accompanying drawings, in which:

0054264

-4-

Figure 1 is a central sectional view of the combined inlet and outlet fitting to which the invention relates, shown installed in combination with an inverted bucket-type steam trap as disclosed in U. S. Patent No. 4 149 557.

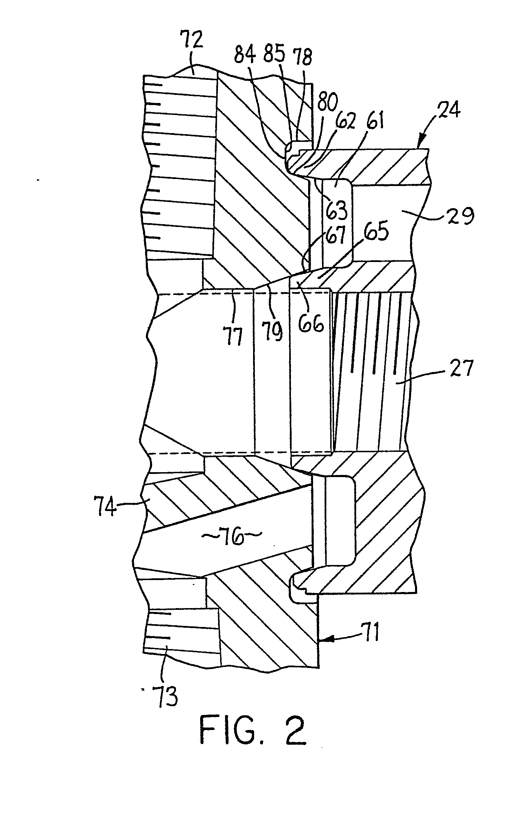

Figure 2 is an enlarged view of a fragment of Figure 1, with the connecting bolt removed in order better to illustrate the structure.

SUMMARY

In general, the objects and purposes of the invention are met by providing a combined inlet and outlet fitting for fluids, particularly for use in combination with an inverted bucket steam trap, which fitting comprises an elongated block having an inlet passage and an outlet passage extending lengthwise through the block. The inlet passage and the outlet passage are adapted to be connected at corresponding one ends thereof to a mechanism, such as the inverted bucket steam trap, in order to supply fluid to and to remove fluid from the mechanism. The other ends of the inlet and outlet passages are located at the same one end of the block. A coupling is attached to said one end of the block. The coupling has an inlet port adapted to be connected to a fluid supply conduit and an outlet port adapted to be connected to a fluid discharge conduit. The coupling is rotatably engaged with said one end of the block so that the coupling can be moved arcuately about an axis extending lengthwise of the block whereby the inlet and outlet ports can be located at any selectable adjustable arcuate position relative to the elongated block and then the coupling can be fixed in that position and sealed to said block. The inlet and outlet ports of the coupling are in fluid flow communication with the inlet and outlet passages in the elongated block in all of the selectable adjustable arcuate positions of the coupling relative to the block. Fastening means are provided for releasably securing the coupling in sealed relationship with the block.

DESCRIPTION OF A PREFERRED EMBODIMENT

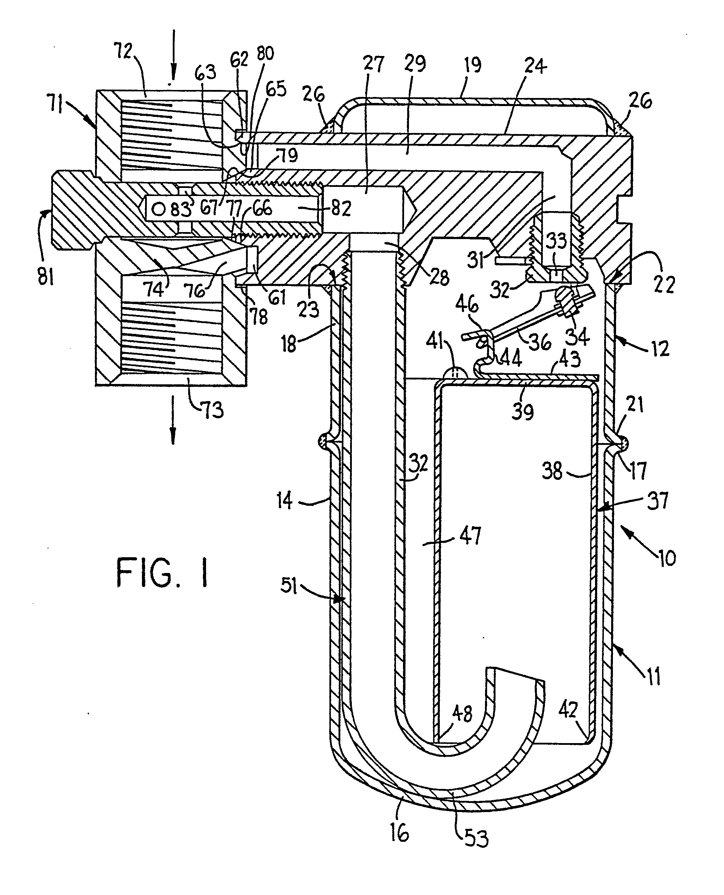

The steam trap 10, per se, illustrated in Figure 1 is the same as the steam trap disclosed in U. S. Patent No. 4 149 557 and, accordingly, only brief details of its construction and operation will be given herein. Additional details and explanation concerning the steam trap 10 will be found in the above-referenced United States Patent, to which attention is directed. Moreover, although Figure 1 illustrates the steam trap of U. S. Patent No. 4 149 557, in its broader aspects, the combined inlet and outlet fitting according to the invention can be employed with a wide variety of different fluid handling mechanisms and it is not limited to use with the steam trap illustrated in the drawings.

The steam trap 10 illustrated in the drawings has an exterior casing comprised of a lower casing section 11 and an upper casing section 12, both made of sheet stock of substantially uniform wall thickness. The lower casing section 11 has a cylindrical side wall 14 which is open at its upper end and which is closed at its lower end by a bottom wall 16. The upper edge portion of the wall 14 is flared radially outwardly to define a radial flange 17. The upper casing section 12 has a cylindrical side wall 18 which is open at its bottom and which is closed at its top by a top wall 19. The lower edge portion of the side wall 18 is flared radially outwardly to define a flange 21 having a peripheral diameter generally equal to the peripheral diameter of the radially extending flange 17 on the lower casing section 11. The flanges 17 and 21 are secured together, as by a weld, thereby to form a sealed and tamper-proof steam trap.

A pair of diametrically aligned circular openings 22 and 23 are provided in the cylindrical wall 18 adjacent the upper end thereof. An elongated block 24 extends through the openings 22 and 23 and is affixed to the wall 18, such as by welds 26. The block 24 has an inlet passage 27 extending into the casing from the leftward end of the block. The inlet passage 27 is generally L-shaped and it has a downwardly extending connecting portion 28. The block 24 also has an outlet passage 29 extending into the casing from the leftward end of the block generally parallel with and disposed above the inlet passage 27. The outlet passage 29 also is substantially L-shaped and it has a downwardly extending portion 31. A hollow externally threaded plug 32 is threadedly received into the threaded recess at the lower end of portion 31. The plug 32 has a passageway 33 through the central portion thereof communicating between the interior of the upper casing section 12 and the passage 29. The lower edge of the passageway 33 defines a valve seat.

A valve member 34 is secured to an operating lever assembly 36. The operating lever assembly 36 is pivotally mounted, in a conventional manner, so that said assembly is capable of pivoting about a horizontal axis. Pivotal movement of the lever assembly 36 about the horizontal pivot axis will move the valve member 34 into and out of sealing relationship with the valve seat defined by the lower edge of the passageway 33 in the plug 32.

An inverted bucket 37 is disposed inside the casing. Preferably the bucket is shaped by drawing a sheet of substantially uniform thickness so as to form a vertical wall 38, which is open at its bottom and closed at its top by a top wall 39. In this particular embodiment, the top wall 39 is flat. A small opening 41 is provided in the top wall 39 offset from the center thereof to permit escape of gas from the upper end of the bucket at a slow controlled rate in a known manner. The bottom edge of the inverted bucket is flared radially inwardly to define a lip 42.

A connector 43 is secured, as by welding, to the upper surface of the top wall 39. The connector 43 has an upwardly extending extension portion 44 close to the common central axis of both the upper and lower casing sections, 12 and 11, respectively, and is bent to define a hook 46 at the upper end thereof. The hook 46 extends through a slot in the lever assembly 36.

The vertical wall 38 is formed to provide a concavo-convex portion, whose outer concave side defines a recess 47 which is preferably substantially U-shaped in cross section. The recess extends continuously from the top to the bottom of the inverted bucket 37, for purposes to be described below. The lower edge 48 of the wall 38 in the recess 47 is straight.

The inverted bucket 37 has sufficient weight to pull the operating lever assembly 36 downwardly and, consequently, pull the valve member 34 away from the valve seat when an insufficient amount of steam has been collected inside the inverted bucket and it is required that condensate be removed from the trap 10. However, when a sufficient quantity of steam collects in the upper end of the bucket 37 to impart buoyancy thereto, the bucket will rise and will close the valve member 34 against the seat.

A substantially J-shaped inlet tube 51 is disposed entirely within the casing 10. The upper end of the inlet tube 51 is threadedly secured in the opening of the connecting portion 28 of the inlet passage 27. The lower end of the inlet tube 51 extends upwardly into the lower end of the inverted bucket 37. The upright leg 52 of the inlet tube 51 is partially received in the recess 47 and extends lengthwise therein. The reversely curved portion 53 of the inlet tube 51 extends under the lower edge 48 of the recess 47 so that the inverted bucket 37 is supported thereon in the lowermost position of the bucket.

As thus far described, except for the elongated block 24, the steam trap 10 is the same as the trap disclosed in U. S. Patent No. 4 149 557. It can be replaced by other steam traps or other fluid handling mechanisms capable of using the combined inlet and outlet fitting to which the invention relates.

The elongated block 24 extends leftwardly beyond the leftward side of the steam trap casing. The inlet passage 27 and the outlet passage 29 both extend to the leftward end of the elongated block 24. The leftward end of the block 24 is shaped to define an annular recess 61, the upper portion of which communicates with the leftward end of the outlet passage 29. The annular recess 61 encircles the inlet passage 27, but is blocked from direct fluid flow communication therewith by the wall portion 65 that defines the inlet passage 27. The block 24 has a radially outer, annular, leftwardly projecting lip 62 disposed radially outwardly of and projecting axially leftwardly beyond the annular recess 61. The outer lip 62 is coaxial with the central axis of the inlet passage 27. The radially inner surface 63 of the outer annular lip 62 flares in a leftward direction.

The leftward end of the inlet passage 27 in the block 24 is internally threaded for purposes to be described hereinbelow. The wall portion 65 of the block 24 that defines the inlet opening 27 has a radially inner, annular, axially leftwardly projecting lip 66, which is coaxial with the outer lip 62 and is disposed radially inwardly from the recess 61 and projects axially leftwardly beyond said recess 61. The radially outer surface 67 of the inner annular lip 66 tapers in a leftward direction. The leftward ends of the lips 62 and 66 lie substantially within a common vertical plane as appearing in the drawings.

A coupling 71 is attached to the leftward end of the block 24 and extends transversely thereto so that the combination of the block 24 and the coupling 71 define a substantially T-shaped combined inlet and outlet fitting wherein the block 24 defines the stem of the T and the coupling 71 defines the crossbar of the T. The coupling 71 has an inlet port 72 and an outlet port 73 which are coaxial with each other and perpendicular to the inlet passage 27. The inlet and outlet ports 72 and 73 are illustrated as having internal threads for screwed connections with the inlet and outlet conduits (not shown), respectively, but it will be evident that the ports 72 and 73 can be non-threaded so as to be suitable for solvent weld connection with inlet and outlet conduits, such as CPVC pipes, if desired, without departing from the scope of the invention.

A transverse wall 74 extends across the interior of the coupling 71 to block direct connection between the inlet and outlet ports 72 and 73 from each other. One or more openings 76 extend laterally from the axially inner end of the outlet port 73 through the rightward side of the coupling 71 for communication with the annular recess 61 so that fluid flows from the passage 29, through the recess 61 and thence outwardly through the outlet port 73.

The rightward side of the coupling 71 has a circular through opening 77 which is coaxial with the inlet passage 27 in the block 24 and which is adapted to receive the inner annular lip 66. The rightward side of the coupling 71 also has an annular groove 78 for receiving the outer annular lip 62. The surface 79 of the opening 77 tapers in a leftward direction for engaging the tapered surface 67 of the inner annular lip 66 so that a fluid-tight seal can be established therebetween. The radially inner surface 80 of the groove 78 flares in a leftward direction for engaging the flared surface 63 of the outer annular lip 62 so that a fluid-tight seal can be established therebetween. The groove 78 has a substantially flat bottom wall 85.

The tapered surface 67 and the flared surface 63 on the block 24 extend at substantially equal, but opposite angles, relative to the axis of the inlet passage 27, for example, an angle of 12° ± 1/2°. The tapered surface 79 and the flared surface 80 on the coupling 71 also extend at substantially equal, but opposite, angles relative to the axis of the inlet passage, which latter angle is larger than the angle of the surfaces 67 and 63, for example, an angle of 20° ± 1/2°. The dimensions of the mating tapered surfaces 67 and 79, relative to the dimensions of the
mating flared surfaces 63 and 80, are selected so that,
when the coupling is assembled to the block 24, the
surfaces 67 and 79 will abut against and sealingly
engage each other slightly before surfaces 63 and 80
abut against and sealingly engage each other.  The
lip 66 can be deformed radially inwardly during such
assembly until surfaces 63 and 80 sealingly engage
each other.  Moreover, if necessary to secure a fluid-
tight assembly, the axial end 84 of lip 62 can be
drawn into abutting sealing engagement with the bottom
wall 85 of the groove 78.

The coupling 71 is releasably, sealingly affixed
to the leftward end of the block 24 by means of a
bolt 81.  The bolt 81 extends transversely through the
inlet port 72 adjacent to the inner end thereof and
thence extends through the opening 77 into the inlet
passage 27.  The inner end of the bolt 81 is externally
threaded for threaded engagement with the internal
threads in the inlet passage 27.  The bolt has an
axially extending opening 82 which is open at its
rightward end for communication with the inlet passage
27.  The leftward end of the opening 82 is closed.
A plurality of openings 83 are provided in the bolt
and extend radially outwardly from the opening 82
for communication with the inlet port 72 so that
incoming fluid can flow from the inlet port 72,
through the openings 83 and 82 into the inlet passage 27.

ASSEMBLY AND OPERATION

The assembly of the coupling 71 to the block 24
is effected by placing the coupling 71 in the proper
angular orientation with respect to the block 24 and
tightening the bolt 81 in order to place the outer lip
62 in the groove 78 and to place the inner lip 66 inside the opening 77. Adjustment of the angular position of the coupling 71 relative to the block 24 can be effected before the bolt 81 is fully tightened. Because the lips 62,66, groove 78 and opening 77 are circular and coaxial, the coupling 71 is rotatable relative to the block 24 and can be disposed at any angle relative to the block 24 to meet the requirements of a particular installation. Following adjustment of the angular position of coupling 71, the bolt 81 is fully tightened to obtain a fluid-tight sealing engagement. During tightening of the bolt 81, first the tapered surfaces 67 and 79 are brought into abutting sealed relationship. Further tightening of the bolt 81 brings the flared surfaces 63 and 80 into abutting sealed relationship or, if the surfaces 63 and 80 do not tightly sealingly abut against each other, the axial end 84 of lip 62 is brought into abutting sealed relationship against the bottom wall 85 of the recess 78. During this further tightening of the bolt, the lip 66 can be deformed radially inwardly as necessary to accommodate such further tightening. However, when the axial end 84 of lip 62 abuts against the bottom wall 85 of the groove 78, such engagement provides a positive stop and prevents further deformation of the lip 66. Thereby, leakage between inlet passage 27 and outlet passage 29 and between coupling 71 and block 24 is eliminated. The coupling 71 and the block 24 can be easily disassembled by reversing the above-described steps. It is to be noted that assembly and disassembly can be done very easily because such involves only manipulation of the bolt 81. The steam trap 10 including block 24 can be easily replaced as a unit.

Although the operation of inverted bucket-type steam traps is well known, an abbreviated discussion thereof will be described below for convenience.

The steam trap 10 is normally installed in a vertical position in a drain line between the steam-heated unit connected to the inlet port 72 and the condensate return header connected to the outlet port 73. When the inverted bucket 37 is in the lowermost position, as shown, the operating lever assembly 36 is in the lower position and the valve member 34 is wide open. The initial flood of condensate enters the steam trap 10 through inlet port 72 and flows through openings 83,82, passage 27 and pipe 52 and then flows beneath the lip 42 of the inverted bucket 37 to fill the trap casing and completely submerge the inverted bucket. Excess condensate is discharged through the wide open valve member 34 to the outlet passage 29, recess 61 and passageway 76 to the discharge port 73. When steam enters the steam trap 10, it collects at the top portion of the inverted bucket 37 imparting buoyancy thereto. The inverted bucket will then rise and lift the valve member 34 toward its seat at the lower end of the passageway 33. When the valve member is close to the seat, but is still spaced therefrom a small distance, the further flow of condensate through the outlet opening 33 will effect a snapping of the valve member 34 into the closed position.

When the valve member 34 is closed, any air and non-condensible gas entering the trap will pass through the vent 41 in the top wall 39 of the inverted bucket 37 and collect at the top of the steam trap in the upper body part 12. Similarly, steam which reaches the upper end of the bucket will flow through the vent 41 at a slow controlled rate. This team is eventually condensed by radiation from the steam trap. As additional condensate flows into the trap, when the condensate level in the steam trap reaches a level which is slightly above the floating level for the inverted bucket 37, the inverted bucket will exert a slight pull downwardly on the operating lever assembly 36. However, the valve member 34 will not be moved to the open position until the condensate level rises to a predefined opening line in the unit for the existing pressure differential between the steam and the pressure in the outlet passage 29 or condensate return header. When the condensate reaches this level, the weight of the inverted bucket multiplied by the leverage achieved by the length of the operating lever arm assembly 36 exceeds the pressure holding the valve 34 into its sealing engagement with the valve seat. The inverted bucket 37 will then sink and open the valve member 34.

Although a particular preferred embodiment of the invention has been disclosed in detail for illustrative purposes, it will be recognized that variations or modifications of the disclosed apparatus, including the rearrangement of parts, lie within the scope of the present invention.

The embodiments of the invention in which an exclusive property or privilege is claimed are defined as follows:

1. A combined inlet and outlet fitting for a fluid handling mechanism, comprising:

an elongated block having an inlet passage and an outlet passage extending lengthwise through said block, said inlet passage and said outlet passage having corresponding one ends adapted to be connected to the fluid handling mechanism in order to supply fluid to and to remove fluid from the mechanism, respectively, the opposite ends of said inlet passage and said outlet passage extending to the same one longitudinal end of said block; a coupling attached to said one end of said block, said coupling having an inlet port adapted to be connected to a fluid supply conduit and an outlet port adapted to be connected to a fluid discharge conduit, said coupling being interengaged with said one end of said block so that said coupling can be moved arcuately about an axis extending lengthwise of said block so that said inlet and outlet ports can be located at selectable angular positions relative to said elongated block while remaining in fluid flow communication with said inlet and outlet passages, respectively; and fastening means for releasably securing said coupling in fluid-tight sealed relationship with said block.

2. A fitting as claimed in Claim 1 in which said block and said coupling define a T-shaped assembly wherein said block defines the stem of the T and said coupling defines the crossbar of the T.

3. A fitting as claimed in Claim 2 in which said fastening means is a bolt which extends transversely through said coupling and longitudinally into said block, said bolt being threaded into said inlet passage of said block and having a coaxial passageway which communicates at its outer end with said inlet port of said coupling and which communicates at its inner end with said inlet passage of said block.

4. A fitting as claimed in Claim 1, Claim 2 or Claim 3 in which said coupling has an exterior wall disposed adjacent to said one end of said block, one of said exterior wall and said one end of said block having an annular groove therein and the other thereof having an annular lip projecting into said groove and slidably and sealably engaged therewith so that said coupling can be moved arcuately relative to said block about the central axis of said groove to change the arcuate disposition of said inlet port and said outlet port relative to said block.

5. A fitting as claimed in Claim 3 in which said coupling has an exterior wall disposed adjacent to said one end of said block, said exterior wall having a central opening coaxial with said inlet passage and through which said bolt extends, said exterior wall having an annular groove therein coaxial with and radially outwardly spaced from said central opening, said one end of said block having a first annular lip projecting into said central opening and slidably and sealably engaged therewith and a second annular lip projecting into said groove and slidably and sealably engaged therewith so that said coupling can be moved arcuately relative to said block about the central axis of said groove and said opening to change the arcuate disposition of said inlet port and said outlet port relative to said block.

6. A fitting as claimed in Claim 4 in which said outlet passage is parallel with said inlet passage and communicates with an annular recess in said block which recess is disposed radially inside of said groove and communicates with said outlet port in said coupling.

7. A fitting as claimed in Claim 5 in which said outlet passage is parallel with said inlet passage and communicates with an annular recess in said block which recess is disposed radially inside of said groove and radially outwardly of said central opening and communicates with said outlet port in said coupling.

8. A fitting as claimed in Claim 4 in which said groove and said annular lip have similarly inclined walls capable of sealingly engaging each other.

9. A fitting as claimed in Claim 5 in which said groove and said second annular lip have similarly flaring walls capable of sealingly engaging each other and have transversely extending flat faces capable of sealingly engaging each other, and said central opening and said first annular lip have similarly tapering walls capable of sealingly engaging each other.

10. An inverted bucket steam trap, comprising:
a casing defining a water-tight chamber having a cylindrical side wall and closed top and bottom walls;
an elongated block mounted on said cylindrical side wall adjacent the upper end thereof, said block having an inlet passage and an outlet passage extending lengthwise through said block, said inlet passage and said outlet passage having inner end portions opening downwardly into said chamber, said end portion of said outlet passage having a valve seat thereon inside said chamber, the opposite ends of said inlet passage and said outlet passage extending to the same one longitudinal end of said block;

a valve member movably disposed in said chamber and adapted to be moved into and out of sealing engagement with said valve seat;

operating lever means disposed in said chamber and responsive to vertically applied force to effect movement of said valve member toward and away from said valve seat;

a vertically movable inverted bucket disposed in said chamber and having a vertical side wall which is open at its bottom and has a wall at its top and a connection from the top wall of the bucket to said operating lever means whereby vertical movement of said inverted bucket in said chamber will effect movement of said operating lever means thereby to open or close said valve member;

an inlet tube disposed within said chamber and connected at its upper end to said lower end of said inlet passage for receiving steam and condensate therefrom, the lower end of said inlet tube extending upwardly into said inverted bucket;

A coupling attached to said one end of said block, said coupling having an inlet port adapted to be connected to a fluid supply conduit and an outlet port adapted to be connected to a fluid discharge conduit, said coupling being interengaged with said one end of said block so that said coupling can be moved arcuately about an axis extending lengthwise
of said block so that said inlet and outlet ports
can be located at selectable angular positions
relative to said elongated block while remaining
in fluid flow communication with said inlet and
outlet passages, respectively; and

fastening means for releasably securing said
coupling in fluid-tight sealed relationship with
said block.

11.  An inverted bucket steam trap as claimed
in Claim 10 in which said block and said coupling
define a T-shaped assembly wherein said block defines
the stem of the T and said coupling defines the
crossbar of the T.

12.  An inverted bucket steam trap as claimed
in Claim 11 in which said fastening means is a bolt
which extends transversely through said coupling and
longitudinally into said block, said bolt being
threaded into said inlet passage of said block and
having a coaxial passageway which communicates at
its outer end with said inlet port of said coupling
and which communicates at its inner end with said
inlet passage of said block.

13.  An inverted bucket steam trap as claimed in
Claim 10, Claim 11 or Claim 12 in which said coupling
has an exterior wall disposed adjacent to said one
end of said block, one of said exterior wall and said
one end of said block having an annular groove therein
and the other thereof having an annular lip projecting into said groove and slidably and sealably engaged therewith so that said coupling can be moved arcuately relative to said block about the central axis of said groove to change the arcuate disposition of said inlet port and said outlet port relative to said block.

14. An inverted bucket steam trap as claimed in Claim 12 in which said coupling has an exterior wall disposed adjacent to said one end of said block, said exterior wall having a central opening coaxial with said inlet passage and through which said bolt extends, said exterior wall having an annular groove therein coaxial with and radially outwardly spaced from said central opening, said one end of said block having a first annular lip projecting into said central opening and slidably and sealably engaged therewith and a second annular lip projecting into said groove and slidably and sealably engaged therewith so that said coupling can be moved arcuately relative to said block about the central axis of said groove and said opening to change the arcuate disposition of said inlet port and said outlet port relative to said block.

15. An inverted bucket steam trap as claimed in Claim 13 in which said outlet passage is parallel with said inlet passage and communicates with an annular recess in said block which recess is disposed radially inside of said groove and communicates with said outlet port in said coupling.

16. An inverted bucket steam trap as claimed in Claim 14 in which said outlet passage is parallel with said inlet passage and communicates with an annular recess in said block which recess is disposed radially inside of said groove and radially outwardly of said central opening and communicates with said outlet port in said coupling.

17. An inverted bucket steam trap as claimed in Claim 13 in which said groove and said annular lip have similarly inclined walls capable of sealingly engaging each other.

18. An inverted bucket steam trap as claimed in Claim 14 in which said groove and said second annular lip have similarly flaring walls capable of sealingly engaging each other and have transversely extending flat faces capable of sealingly engaging each other, and said central opening and said first annular lip have similarly tapering walls capable of sealingly engaging each other.

FIG. 1

FIG. 2